# EUROPEAN PATENT SPECIFICATION

(11) **EP 2 221 288 B1**
(45) Date of publication and mention of the grant of the patent: **29.08.2012**
(21) Application number: 09008002.9
(22) Date of filing: 18.06.2009
(51) Int. Cl.: C04B 35/593, C04B 35/597, C04B 35/64, F16H 7/08

(54) **Auto tensioner**
Selbstspanner
Tendeur automatique

(30) Priority: 25.06.2008 JP 2008165808
(43) Date of publication of application: 25.08.2010
(73) Proprietor: NTN Corporation, Osaka-shi, Osaka 550-0003 (JP)
(72) Inventor: Izutsu, Tomoyoshi c/o NTN Corporation, Iwata-shi Shizuoka 438-0037 (JP); Muramatsu, Katsutoshi c/o NTN Corporation, Kuwana-shi, Mie 511-0811 (JP)
(74) Representative: Mischung, Ralf

(56) References cited:
- EP-A1- 1 829 844
- JP-A- 2003 301 901
- JP-A- 2004 091 272
- JP-A- 2005 075 652
- JP-A- 2005 194 154

## Description

The present invention relates to auto tensioners, in particular to an auto tensioner for maintaining the tensile force of a timing belt, a timing chain, an auxiliary belt, and the like of an engine constant.

### [Background Art]

The auto tensioner generally has an upper opening of a cylinder, which is interiorly filled with hydraulic oil sealed by incorporating an oil seal, where an air accumulating portion is provided above the hydraulic oil and a slidable plunger for partitioning the interior of the cylinder into a pressure chamber and a reservoir chamber is provided at a lower end of a rod passing through the oil seal in a freely slidable manner. A path that communicates the pressure chamber and the reservoir chamber is provided, and a check valve is incorporated at an opening on the pressure chamber side of the path. The rod is given an outward projecting property by a return spring incorporated inside the cylinder, where the rod is moved outward to absorb the looseness of the belt when the tensile force on the loose side belt lowers, and when the tensile force of the belt increases, a pushing force applied from the belt to the rod is absorbed by a damper action of the hydraulic oil sealed in the pressure chamber to maintain the tensile force of the belt constant.

In the conventional auxiliary hydraulic auto tensioner and the like, a steel ball is used for a valve body of the check valve to prioritize the function in time of low frequency-large amplitude. The steel valve body has a large mass, and thus the follow-up property of the valve body with respect to change in pressure in the pressure chamber is unsatisfactory and the path cannot be sensitively opened/closed due to the influence of inertia by the behavior of the valve body. When the belt vibrates at high frequency, lack in supply of hydraulic oil to the pressure chamber occurs, the hydraulic damper effect by the hydraulic oil in the pressure chamber lowers, and the change in tensile force of the belt may not be absorbed.

Thus, in recent years, use of a ceramics ball capable of achieving light weight for the valve body of the check valve has been proposed (Patent Document 1). In other words, the check ball of the check valve is made of fine ceramics such as SiC (silicon carbide), Al₂O₃ (alumina), ZrO₂ (zirconia), and the like.

The fine ceramics have properties of being light, hard, beautiful, and less likely to be scratched, and have drawbacks in being easily breakable and having unsatisfactory workability. The ceramics such as silicon nitride and sialon have high manufacturing cost in comparison with steel, and thus the manufacturing cost of the auto tensioner greatly rises if the ceramics is used for the valve body (check ball) of the check valve of the auto tensioner.

In recent years, a method of manufacturing the β-sialon, which is ceramics, at low cost by adopting a manufacturing step including combustion synthesis has been developed (see e.g., Patent Documents 2 to 4). The manufacturing of a low-cost auto tensioner, in which the β-sialon is adopted for the raw material of the configuring part, is being reviewed.

### [Citation List]

### [Patent Literature]

[Patent Document 1] JP 2003-301901 A
[Patent Document 2] JP 2004-91272 A
[Patent Document 3] JP 2005-75652 A
[Patent Document 4] JP 2005-194154 A

### [Summary of Invention]

### [Technical Problem]

However, sufficient durability is not easy to stably ensure under the environment the pressure is acting in the hydraulic oil even if the β-sialon is used for the check ball of the check valve.

From the generic JP 2003-301901, an auto tensioner is known which comprises a check valve using a check ball to close a communication path between two pressure chambers. In order to suppress wear of the check ball and the valve sheet surface, shot peening processing is applied to the valve sheet surface and the check ball material is chosen to be preferably harder than that of the valve sheet surface.

In EP 1 829 844 A1, a silicon nitrite based sintered compact is described, which comprises β-sialon. In order to improve the strength and the thermal conductivity, the dissolved amount of Al, O and N is minimized.

In other words, the valve seat surface of the check ball wears, and the check ball adsorbs to the valve seat surface when such wear becomes large, whereby operation failure such as the check ball becoming difficult to separate from the valve seat surface occurs. This may lead to lowering in the life of the auto tensioner.

In view of such problems, the present invention provides an inexpensive auto tensioner capable of stably ensuring sufficient durability, and capable of achieving light weight.

### [Solution to Problems]

A first auto tensioner of the present invention includes the features of claim 1.

Further details of the invention are outlined in the dependent claims.

The β-sialon having various compositions in which the value of z (hereinafter referred to as z-value) is equal to or greater than 0.1 can be manufactured by adopting the manufacturing step including combustion synthesis. The hardness that generally greatly influences the durability with respect to the rolling and sliding fatigue barely changes in the range in which the z-value is equal to or smaller than 4.0 at which manufacturing is easy. However, it has been found as a result of examining, in detail, the relationship between the durability with respect to the rolling and sliding fatigue of the member including a sintered body having β-sialon as a main component and the z-value, that the durability with respect to the rolling and sliding fatigue of the member including a sintered body greatly lowers when the z-value exceeds 3.5.

More specifically, in a range in which the z-value is equal to or greater than 0.1 and equal to or smaller than 3.5, stripping occurs at the surface of the member including the sintered body and breakage occurs if the durability with respect to the rolling and sliding fatigue is substantially the same and the operation time exceeds a predetermined time. On the other hand, the member including the sintered body tends to easily wear if the z-value exceeds 3.5, and the durability with respect to the rolling and sliding fatigue greatly lowers as a result. That is, the following phenomenon has been proved: in which the breakage mode of the member including the sintered body made of β-sialon changes with the stripping occurs at the surface of the member including the sintered body and breakage occurs if the durability with respect to the rolling and sliding fatigue is substantially the same and the operation time exceeds a predetermined time. On the other hand, the member including the sintered body tends to easily wear if the z-value exceeds 3.5, and the durability with respect to the rolling and sliding fatigue greatly lowers as a result. That is, the following phenomenon has been proved: in which the breakage mode of the member including the sintered body made of β-sialon changes with the composition at which the z-value becomes 3.5 as a boundary, and the durability with respect to the rolling and sliding fatigue greatly lowers when the z-value exceeds 3.5. Therefore, in the member made of β-sialon, the z-value needs to be set equal to or smaller than 3.5 so as to stably ensure sufficient durability with respect to the rolling and sliding fatigue.

On the other hand, as mentioned above, the β-sialon can be inexpensively manufactured by manufacturing through the manufacturing step including combustion synthesis. However, it has been found that combustion synthesis is difficult to perform if the z-value is smaller than 0.1. Thus, the z-value needs to be set to greater than 0.1 so as to inexpensively.

In other words, when the z-value lowers, the strength of the raw material configuring the check ball tends to increase. However, on the other hand, the check ball becomes difficult to elastically deform when the z-value lowers. The contacting area thus reduces and the contact surface pressure increases. As a result, when hard foreign substances come between the check ball and the counterpart member side (valve seat surface), the counterpart member facing the check ball made of the sintered body is easily damaged. On the other hand, when the z-value becomes high, the check ball easily elastically deforms, and thus the contacting area becomes large and the contact surface pressure lowers. However, on the other hand, when the z-value of the check ball becomes high, the strength of the raw material configuring the check ball tends to lower in accordance therewith. Thus, the check ball itself tends to be easily damaged by the hard foreign substances. Therefore, the z-value needs to be set within a range in which the balance between the strength of the raw material configuring the check ball and the reduction of the contact surface pressure can be ensured.

More specifically, when the z-value of the check ball made of β-sialon sintered body becomes smaller than 1.0, the influence of the increase in the contact surface pressure becomes large. Thus, when the hard foreign substances come between the check ball and the counterpart member side, the indentation formed on the when the z-value of the check ball becomes high, the strength of the raw material configuring the check ball tends to lower in accordance therewith. Thus, the check ball itself tends to be easily damaged by the hard foreign substances. Therefore, the z-value needs to be set within a range in which the balance between the strength of the raw material configuring the check ball and the reduction of the contact surface pressure can be ensured.

More specifically, when the z-value of the check ball made of β-sialon sintered body becomes smaller than 1.0, the influence of the increase in the contact surface pressure becomes large. Thus, when the hard foreign substances come between the check ball and the counterpart member side, the indentation formed on the counterpart member becomes large, and damages such as wear caused by such indentation tends to easily occur. As a result, the fatigue life of the auto tensioner provided with the check ball made of β-sialon sintered body lowers. Therefore, when used under the environment the hard foreign substances enter the interior of the auto tensioner, the z-value of the check ball made of β-sialon sintered body needs to be set to greater than 1.0.

On the other hand, when the z-value of the check ball made invention is the sintered body including, as the main component, β-sialon expressed by the composition formula Si_{6-z}Al_{z}O_{z}N_{8-z} where 0.1≤z≤2.0 is satisfied and includes impurities as remainder. Thus, according to such check ball, it is possible to stably ensure sufficient durability at low cost, and to provide the check ball made of β-sialon sintered body that can be used even under the environment hard foreign substances come between the check ball and the counterpart member side (valve seat surface).

The check ball of the second auto tensioner of the present invention basically has a configuration of the check ball of the first auto tensioner, and has effects similar to those of the first auto tensioner.

In particular, the sintering additive is used in the check ball of the second auto tensioner, and porosity of the sintered body can be easily lowered by using the sintering additive. Thus, it is possible to easily provide the check ball made of β-sialon sintered body capable of stably ensuring sufficient durability.

At least one kind of oxide, nitride, and oxynitride of magnesium (Mg), aluminum (Al), silicon (Si), titanium (Ti), and rare earth elements can be adopted as the sintering additive. To achieve effect the same as the check ball in the first auto tensioner, the sintering additive is desirably set equal to or smaller than 20% by mass of the sintered body.

The check ball preferably has, in a region including a contact surface with a valve sheet surface, a dense layer having denseness higher than interior denseness.

The layer having high denseness is a layer of low porosity (high density) in the sintered body, and can be examined in the following manner. First, the sintered body is cut at the cross-section perpendicular to the surface of the sintered body, and the cross-section is mirror lapped. Subsequently, the mirror lapped cross-section is photographed, for example, at approximately 50 to 100 times with the oblique light (dark field) of an optical microscope, and recorded as an image of equal to or greater than 300 DPI (Dot Per Inch). In this case, the white region observed as a region of white corresponds to a region of high porosity (low density). Therefore, the region where the area ratio of the white region is low has high denseness in comparison with the region of high area ratio. The recorded image is binarized with use of an image processing device based on a luminance threshold value and then the area ratio of the white region is measured, and the denseness of the photographed region can be known by the area ratio.

That is, a dense layer, which is a layer having lower area ratio of the white region than that in the interior, is formed in a region including the contact surface in the sintered body of the present invention. The photographing is preferably performed at random at five or more locations, and the area ratio is preferably evaluated with the average value thereof. The area ratio of the white region in the interior of the sintered body is, for example, equal to or greater than 15%. The dense layer preferably has a thickness of equal to or greater than 100 µm to further enhance the durability with respect to the rolling and sliding fatigue of the sintered body.

When a cross-section of the dense layer is observed with oblique light of an optical microscope, an area ratio of a white region observed as a region of white is preferably equal to or smaller than 7%.

Further, a highly dense layer having denseness higher than that of other regions in the dense layer is preferably formed in a region including a surface of the dense layer. In addition, when a cross-section of the highly dense layer is observed with oblique light of an optical microscope, an area ratio of a white region observed as a region of white is preferably equal to or smaller than 3.5%.

The auto tensioner may be used in the timing belt tensile force adjustment device of the automobile engine, the auxiliary belt tensile force adjustment device of the automobile engine, or in the timing chain tensile force adjustment device of the automobile engine.

### [Advantageous Effects of Invention]

In the present invention, the friction resistance with the site contacting the check ball can be reduced. Thus, the check ball is prevented from being adsorbed to the counterpart member side, and is avoided from being inseparable from the counterpart member side. Therefore, a longer life of the auto tensioner can be achieved.

The sintered body according to the present invention includes, as the main component, the β-sialon expressed by the composition formula Si_{6-z}Al_{z}O_{z}N_{8-z} where 0.1<z≦2.0 is satisfied. Thus, the auto tensioner provided with the check ball including β-sialon sintered body capable of stably ensuring sufficient durability can be provided at low cost.

The durability can be further enhanced when the dense layer is provided in the sintered body. In particular, the durability with respect to rolling and sliding fatigue of the sintered body can be further enhanced by enhancing the denseness of the dense layer to an extent the area ratio of the white region becomes equal to or smaller than 7%. Therefore, the durability with respect to rolling and sliding fatigue of the sintered body of the present invention can be further enhanced by such configuration.

The durability can be further enhanced by providing a highly dense layer of higher denseness in the dense layer. In particular, the denseness of the highly dense layer can be enhanced if the area ratio of the white region is equal to or smaller than 3.5%.

Therefore, the auto tensioner is suitable to the timing belt tensile force adjustment device, the auxiliary belt tensile force adjustment device, the timing chain tensile force adjustment device, or the like of the automobile engine, because it is provided with the check ball excelling in durability.

### [Brief Description of Drawings]

[FIG.1] A sectional view of an auto tensioner illustrating an embodiment of the present invention.
[FIG. 2] A flowchart illustrating manufacturing step of a check ball of the auto tensioner.
[FIG. 3] Another flowchart illustrating manufacturing step of another check ball of the auto tensioner.
[FIG. 4] A photograph obtained by photographing a cross-section of a test piece for observation with oblique light of an optical microscope.
[FIG. 5] An example illustrating a state in which an image of the photograph of FIG. 4 is binarized with use of an image processing application based on a luminance threshold.
[FIG. 6] A view illustrating a region (evaluation region) in which an image processing is performed when the image of the photograph of FIG. 4 is binarized with use of an image processing application based on a luminance threshold.

### [Description of Embodiments]

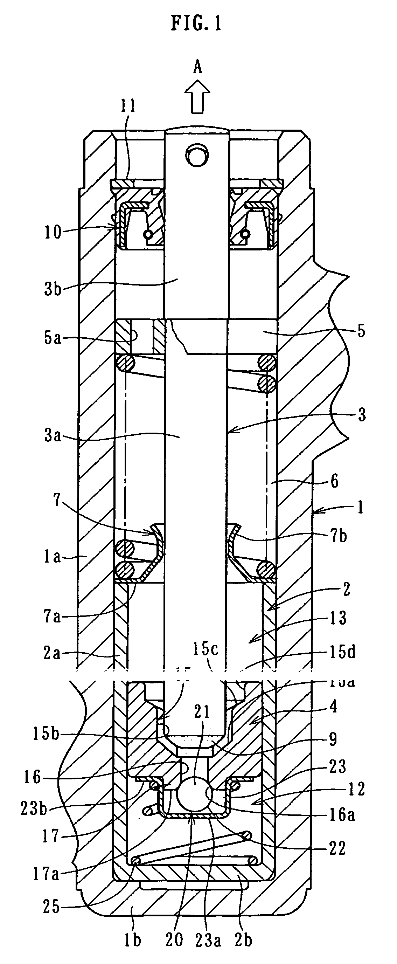

The embodiments of the present invention are described below based on FIG. 1 to FIG. 6.

An auto tensioner according to the present invention includes a cylinder 1 having one end side (lower part in the figure) closed and the other end side (upper part in the figure) opened (released); a bottomed tubular sleeve 2 accommodated in the cylinder 1; a rod 3 fitted in the cylinder 1; and a plunger 4 accommodated in the sleeve 2.

The cylinder 1 includes a tubular main body 1a and a bottom wall 1b for blocking the lower opening of the main body 1a, and the sleeve 2 includes a tubular main body 2a and a bottom wall 2b for blocking the lower opening of the main body 2a. The sleeve 2 is fitted into the cylinder 1 such that the bottom wall 2b is placed on the bottom wall 1b of the cylinder 1.

The rod 3 includes a rod main body 3a and a large diameter shaft portion 3b arranged in connection to the upper end of the rod main body 3a. The cylinder 1 is fitted with a wear ring 5 slidable along an inner diameter surface of the cylinder 1 in the cylinder 1. The rod 3 is attached to the wear ring 5, and the large diameter shaft portion 3b extends from the wear ring 5. A path 5a through which air and hydraulic oil can flow is provided in the wear ring 5.

A return spring 6 is interposed between the wear ring 5 and the sleeve 2, and a pressing force in a direction of an arrow A is applied to the rod 3 by an elastic force of the return spring 6. In this case, a spring receiver 7 is provided at the upper opening end of the sleeve 2. The spring receiver 7 includes a flat ring-shaped base portion 7a, and a tubular portion 7b uprising from an inner diameter part of the base portion 7a. The rod main body 3a of the rod 3 is inserted through the spring receiver 7 in a freely fitting manner. The spring receiver 7 also serves as a guide for the rod 3 to reciprocate in the axial direction.

The upper opening of the cylinder 1 is blocked by a seal member 10 externally fitted to the large diameter shaft portion 3b of the rod 3. In this case, a retaining ring 11 is attached to the inner diameter surface of the upper opening of the cylinder 1, and the seal member 10 is received by the retaining ring 11. A tapered portion 9 is provided at the distal end (lower part) of the rod 3.

The plunger 4 partitions the interior of the cylinder 1 into a pressure chamber 12 and a reservoir chamber 13. In this case, the plunger 4 is formed of a block body having a hole 15 to which the distal end of the rod 3 can be fitted. The plunger 4 is provided with a path 16 for communicating the pressure chamber 12 and the reservoir chamber 13. In other words, the plunger 4 has a projecting raised portion 17 provided at a central part of the lower surface thereof, and the path 16 is opened to an end face (lower end face) 17a. The hole 15 of the plunger 4 includes a lower tapered portion 15a having a diameter increasing towards the upper side, an intermediate hole 15b provided on the upper side of the lower tapered portion 15a, and an upper opening 15d which has a large diameter and provided in connection to the intermediate hole 15b via an intermediate tapered portion 15c which having a diameter increasing towards the upper side.

The path 16 is provided with a closing means 20 for closing the path 16 when the pressure of the pressure chamber 12 becomes higher than the pressure of the reservoir chamber 13. The closing means 20 is configured by a check valve 22 including a check ball 21. In other words, the check valve 22 includes the check ball 21 serving as a valve body to be fitted to a valve seat surface 16a provided at the lower opening end of the path 16, and a retainer 23 for limiting the open/close amount of the check ball 21.

The retainer 23 includes a main body 23a, which is a bottomed short tubular body, and an outer collar portion 23b extending in an outer diameter direction from the upper opening end of the main body 23a, and the main body 23a is fitted to the projecting raised portion 17 of the plunger 4. The pressure chamber 12 accommodates a spring 25 for pushing the plunger 4 upward. In other words, the spring 25 includes a coil spring having a diameter reducing from the lower side towards the upper side, and the upper end thereof presses the outer collar portion 23b of the retainer 23.

The elastic force of the return spring 6 is larger than the elastic force of the spring 25. The load applied on the rod 3 is received by the plunger 4. The hydraulic oil is filled to the interior of a working chamber including the pressure chamber 12 and the reservoir chamber 13, and an air chamber is provided above the working chamber. Silicon oil in which change in viscosity is small is preferably used for the hydraulic oil, but engine oil or other oil may be used.

The auto tensioner configured as described above is used in a timing belt tensile force adjustment device and the like of an automobile engine. In other words, when the tensile force of the belt changes and the belt loosens in the tensile force adjustment state of the belt, the rod 3 moves outward (i.e., moves in the direction of arrow A of FIG. 1) by the pressing of the return spring 6 to absorb the loosening of the belt. The timing belt is a belt for driving a camshaft from the rotation of the crankshaft of the engine.

In this case, the plunger 4 also moves in the same direction as the rod 3, and thus the volume of the pressure chamber 12 becomes large, thereby lowering the pressure. When such pressure becomes lower than the pressure of the reservoir chamber 13, the check valve 22 opens the path 16 so that the hydraulic oil of the reservoir chamber 13 flows from the path to the pressure chamber 12, and the rod 3 and the plunger 4 rapidly move outward and immediately absorb the loosening of the belt.

On the other hand, when the tensile force of the belt becomes large, the pushing force is applied from the belt to the rod 3. In this case, the pressure of the pressure chamber 12 becomes higher than the pressure of the reservoir chamber 13, and thus the check valve 22 closes the path 16 so that the pushing force applied on the rod 3 is buffered by the hydraulic oil enclosed in the pressure chamber 12.

If the pushing force is larger than the elastic force of the return spring 6, the hydraulic oil of the pressure chamber 12 flows into the reservoir chamber 13 from a micro leak gap formed between the slidable surfaces of the sleeve 2 and the plunger 4, the rod 3 slowly moves backward to a position at which the pushing force and the elastic force of the return spring 6 are balanced, and the tensile force of the belt is maintained constant.

Therefore, in the tensile force adjustment state, the check valve 22, which is the closing means 20, performs the open/close operation. The valve seat surface 16a of the check ball 21 thus wears, and the check ball 21 adsorbs to the valve seat surface 16 when the wear becomes large, whereby operation failure such as the check ball 21 becoming difficult to separate from the valve seat surface 16a occurs.

In the present invention, the check ball is molded with ceramics. The ceramics (sintered body) includes, as the main component, β-sialon expressed by a composition formula Si_{6-z}Al_{z}O_{z}N_{8-z} where 0.1 ≦ z ≦ 2.0 is satisfied, and includes impurities as remainder. The impurity includes impurities originating from the raw material, or the inevitable impurities including those mixed in the manufacturing step. The β-sialon is configured by elements of silicon, aluminum, oxygen, and nitrogen, and is a solid solution of such elements expressed by the composition formula Si_{6-z}Al_{z}O_{z}N_{8-z}.

When configuring the check ball by the β-sialon sintered body under the environment hard foreign substances enter the interior of the auto tensioner, breakage easily occurs at the counterpart member if the z-value is smaller than 1.0, and in contrast, the check ball itself easily breaks if the z-value is greater than 2.0 from the relationship of the aggressiveness on the counterpart member side of the check ball and the z-value.

In other words, when the z-value lowers, the strength of the raw material configuring the check ball tends to increase. However, on the other hand, the check ball becomes difficult to elastically deform when the z-value lowers. The contacting area thus reduces and the contact surface pressure increases. As a result, when hard foreign substances come between the check ball and the counterpart member side (valve seat surface), the counterpart member facing the check ball made of the sintered body is easily damaged. On the other hand, when the z-value becomes high, the check ball easily elastically deforms, and thus the contacting area becomes large and the contact surface pressure lowers. However, on the other hand, when the z-value of the check ball becomes high, the strength of the raw material configuring the check ball tends to lower in accordance therewith. Thus, the check ball itself tends to be easily damaged by the hard foreign substances. Therefore, the z-value needs to be set within a range in which the balance between the strength of the raw material configuring the check ball and the reduction of the contact surface pressure can be ensured.

More specifically, when the z-value of the check ball made of β-sialon sintered body becomes smaller than 1.0, the influence of the increase in the contact surface pressure becomes large. Thus, when the hard foreign substances come between the check ball and the counterpart member side, the indentation formed on the counterpart member becomes large, and damages such as stripping caused by such indentation tends to easily occur. As a result, the fatigue life of the auto tensioner provided with the check ball made of β-sialon sintered body lowers. Therefore, when used under the environment the hard foreign substances enter the interior of the auto tensioner, the z-value of the check ball made of β-sialon sintered body needs to be set equal to or greater than 1.0.

On the other hand, when the z-value of the check ball made of β-sialon sintered body exceeds 2.0, the influence of lowering of the strength of the raw material configuring the check ball outweighs the effect of reduction in the contact surface pressure. Thus, when the hard foreign substances come between the check ball and the counterpart member side (valve seat surface), the check ball itself made of β-salon sintered body is damaged and the fatigue life lowers. Further, when the z-value exceeds 2.0, there arise a problem in that the frictional force that acts between the check ball and the counterpart member increases in accordance with increase in the contacting area. Therefore, when used under the environment the hard foreign substances enter the interior of the auto tensioner, the z-value of the check ball made of β-sialon sintered body needs to be set equal to or smaller than 2.0.

Therefore, the sintered body includes, as the main component, β-sialon expressed by the composition formula Si_{6-z}Al_{z}O_{z}N_{8-Z} where 0.1≦z≦2.0 is satisfied, and includes impurities as remainder. Thus, it is possible to provide an inexpensive auto tensioner provided with the check ball 21 made of β-sialon sintered body capable of stably ensuring sufficient durability.

Configuration may be made of the sintered body expressed by the composition formula Si_{6-z}Al_{z}O_{z}N_{8-z} including, as the main component, pressure can be ensured.

More specifically, when the z-value of the check ball made of β-sialon sintered body becomes smaller than 1.0, the influence of the increase in the contact surface pressure becomes large. Thus, when the hard foreign substances come between the check ball and the counterpart member side, the indentation formed on the counterpart member becomes large, and damages such as stripping caused by such indentation tends to easily occur. As a result, the fatigue life of the auto tensioner provided with the check ball made of β-sialon sintered body lowers. Therefore, when used under the environment the hard foreign substances enter the interior of the auto tensioner, the z-value of the check ball made of β-sialon sintered body needs to be set to greater than 1.0.

On the other hand, when the z-value of the check ball made of β-sialon sintered body exceeds 2.0, the influence of lowering of the strength of the raw material configuring the check ball outweighs the effect of reduction in the contact surface pressure. Thus, when the hard foreign substances come between the check ball and the counterpart member side (valve seat surface), the check ball itself made of β-sialon sintered body is damaged and the fatigue life lowers. Further, when mixture of the β-sialon powder and the sintering additive to a schematic shape of the check ball 21 is performed. Specifically, a molded body molded to a schematic shape of the check ball 21 can be fabricated by applying a molding method such as press molding, casting molding, extrusion molding, and tumbling granulation on the β-sialon powder or the mixture of the β-sialon powder and the sintering additive.

Next, a sintering step 53 of fabricating a sintered body having the schematic shape of the check ball 21 is performed by raising the temperature of the molded body and sintering the same. The sintering step 53 may be performed through a pressureless sintering method performed at normal pressure, but may be performed adopting a sintering method such as hot pressing (HP), and hot isostatic pressing (HIP) . The heating method for the sintered body may adopt electromagnetic wave heating by microwave and millimeter wave other than heater heating.

Next, a finishing step 54 of finishing the check ball 21 is performed by performing finish processing on the sintered body fabricated in the sintering step. Specifically, the surface of the check ball 21 fabricated in the sintering step is polished. The sintered body in this embodiment is thereby finished.

A layer having higher denseness than that of the interior may be provided in a region including the surface (contact surface with another member). Here, the layer having high denseness is a layer of low porosity (high density) in the sintered body, and can be examined in the following manner, for example. First, the sintered body is cut at the cross-section perpendicular to the surface of the sintered body, and the cross-section is mirror lapped. Subsequently, the mirror lapped cross-section is photographed, for example, at approximately 50 to 100 times with the oblique light (dark field) of an optical microscope, and recorded as an image of equal to or greater than 300 DPI (Dot Per Inch). In this case, the white region observed as a region of white corresponds to a region of high porosity (low density). Therefore, the region where the area ratio of the white region is low has high denseness in comparison with the region of high area ratio. The recorded image is binarized with use of an image processing device based on a luminance threshold value and then the area ratio of the white region is measured, and the denseness of the photographed region can be known by the area ratio. That is, a dense layer, which is a layer having lower area ratio of the white region than that in the interior, is formed in a region including the contact surface in the check ball 21 of the present invention. The photographing is preferably performed at random at five or more locations, and the area ratio is preferably evaluated with the average value thereof. The area ratio of the white region in the interior of the sintered body is, for example, equal to or greater than 15%.

The dense layer preferably has a thickness of equal to or greater than 100 µm to further enhance the durability with respect to the rolling and sliding fatigue of the sintered body.

Therefore, the durability of the sintered body can be enhanced by providing a layer of high denseness. In this case, when the cross-section of the dense layer is observed with oblique light of the optical microscope, the area ratio of the white region observed as a region of white is preferably equal to or smaller than 7%. The durability of the sintered body is further enhanced by enhancing the denseness of the dense layer to an extent the area ratio of the white region becomes equal to or smaller than 7%.

The dense layer having higher denseness than that of the interior may be provided in the region including the surface of the dense layer within the dense layer. Thus, the durability of the sintered body can be further enhanced by providing a highly dense layer. In this case, when the cross-section of the highly dense layer is observed with oblique light of the optical microscope, the area ratio of the white region observed as a region of white is preferably equal to or smaller than 3.5%. The durability of the sintered body is further enhanced by enhancing the denseness of the highly dense layer to an extent the area ratio of the white region becomes equal to or smaller than 3.5%.

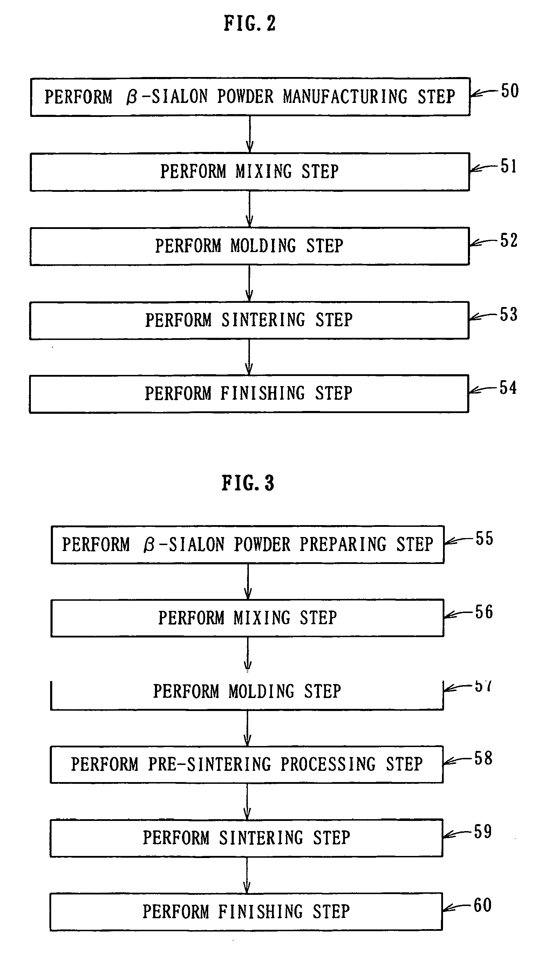

Next, another manufacturing method for the check ball is described with reference to FIG. 3. First, a β-sialon powder preparing step 55 of preparing the β-sialon powder is performed. In the β-sialon powder preparing step, the β-sialon powder can be manufactured at low cost by the manufacturing step adopting, for example, a combustion synthesis method.

Next, a mixing step 56 of adding and mixing the sintering additive to the β-sialon powder prepared in the β-sialon powder preparing step 55 is performed. The mixing step 56 can be omitted if the sintering additive is not to be added.

A molding step 57 of molding the β-sialon powder or the mixture of the β-sialon powder and the sintering additive to a schematic shape of the sintered body is performed. Specifically, a molded body molded to a schematic shape of the sintered body can be fabricated by applying a molding method such as press molding, casting molding, extrusion molding, and tumbling granulation on the β-sialon powder or the mixture of the β-sialon powder and the sintering additive.

Next, a pre-sintering processing step 58 in which the molded body is molded to a shape closer to the desired shape of the sintered body after sintering is performed by processing the surface of the molded body. Specifically, the molded body is molded to a shape closer to the shape of the sintered body after sintering by applying a processing method such as green body processing. The pre-sintering processing step 58 can be omitted if the shape close to the desired shape of the check ball 21 can be obtained after sintering at a stage at which the molded body is molded in the molding step 57.

Next, a sintering step 59 in which the molded body is sintered under the pressure of equal to or smaller than 1 MPa is performed. Specifically, the molded body is heated and sintered by the heating method such as heater heating, and electromagnetic wave heating by microwave and millimeter wave, whereby the sintered body having a schematic shape of the check ball 21 is fabricated. The sintering is performed by having the molded body heated to a temperature region of equal to or higher than 1, 550°C and equal to or lower than 1, 800°C in an inert gas atmosphere or a mixed gas atmosphere of nitrogen and oxygen. While the inert gas may be helium, neon, argon, nitrogen, and the like, nitrogen is preferably used from the standpoint of reducing the manufacturing cost.

Next, a finishing step 60 of finishing the check ball 21 is performed by processing the surface of the check ball 21 fabricated in the sintering step 59 and performing finish processing of removing the region including the surface. Specifically, the surface of the check ball 21 fabricated in the sintering step 59 is polished.

Through sintering in the sintering step, in the region having a thickness of approximately 500 µm from the surface of the check ball 21, there is formed a dense layer in which denseness is higher than that of the interior and an area ratio of the white region observed as a region of white is equal to or smaller than 7% when the cross-section is observed with oblique light of the optical microscope. Further, in the region having a thickness of approximately 150 µm from the surface of the sintered body, there is formed a highly dense layer in which denseness is higher than that of other region in the dense layer and an area ratio of the white region observed as a region of white is equal to or smaller than 3.5% when the cross-section is observed with oblique light of the optical microscope. Therefore, in the finishing step, the thickness of the sintered to be removed is, in particular, preferably equal to or smaller than 150 µm in the region to become the contact surface. The highly dense layer then can be left in the region including the surface of the sintered body, and the durability with respect to the rolling and sliding fatigue of the sintered body can be enhanced.

In the manufacturing method for the check ball, consideration is made in adopting sintering by hot pressing (method of performing sintering normally under the pressure of equal to or greater than 10 MPa) such as hot isostatic pressing (HIP) and gas pressured sintering (GPS) in an aim of suppressing the occurrence of defects that lower the durability with respect to the rolling and sliding fatigue. In such method as well, the porosity of the check ball 21 lowers and a sintered body of high density can be manufactured. However, the manufacturing method adopting the hot pressing leads to rise in the manufacturing cost. Further, in the manufacturing method adopting the hot pressing, an abnormal layer in which the material is altered is formed on a surface layer of the check ball 21. Thus, a need to remove the abnormal layer arises in the finishing processing of the check ball 21, and the manufacturing cost of the check ball 21 further rises. On the other hand, when not adopting the hot pressing, there is a problem that the porosity of the check ball 21 increases and the defect occurs, and the durability with respect to the rolling and sliding fatigue of the check ball 21 lowers.

The inventors of the present invention found that a dense layer having a higher denseness than that of the interior can be formed in the region including the contact surface (surface) formed on the surface of the check ball 21 by manufacturing the check ball 21 by sintering the molded body made of β-sialon under the pressure of equal to or smaller than 1 MPa. In the manufacturing method for the sintered body of the present invention, the dense layer can be formed in the region including the contact surface while suppressing rise in the manufacturing cost involved in the adoption of the hot pressing by including the step of sintering the molded body containing β-sialon as the main component under the pressure of equal to or smaller than 1 MPa. As a result, the sintered body including the β-sialon sintered body capable of stably ensuring sufficient durability can be manufactured at low cost according to the manufacturing method for the check ball of the present invention.

The step in which the molded body is sintered is preferably carried out under the pressure of equal to or greater than 0.01 MPa to suppress break up of the β-sialon, and is more preferably carried out under the pressure of equal to or greater than atmospheric pressure in view of lower cost. The step in which the molded body is sintered is preferably performed under the pressure of equal to or smaller than 1 MPa to form the dense layer while suppressing the manufacturing cost.

In the manufacturing method for the check ball, the molded body is sintered in the temperature region of equal to or higher than 1, 550°C and equal to or lower than 1, 800°C in the step in which the molded body is sintered.

If the temperature at which the molded body is sintered is lower than 1,550°C, the denseness by sintering becomes difficult to advance, and thus the temperature at which the molded body is sintered is preferably equal to or higher than 1,550°C, and more preferably equal to or higher than 1, 600°C. On the other hand, if the temperature at which the molded body is sintered exceeds 1,800°C, there is a fear that the mechanical properties of the check ball 21 are lowered due to coarsing of β-sialon crystal grains, and thus the temperature at which the molded body is sintered is preferably equal to or lower than 1,800°C, and more preferably equal to or lower than 1,750°C.

In the manufacturing method for the check ball, the molded body is sintered in the inert gas atmosphere or in the mixed gas atmosphere of nitrogen and oxygen in the step in which the molded body is sintered.

When the molded body is sintered in the inert gas atmosphere, the break up and change in composition of the β-sialon can be suppressed. When the molded body is sintered in the mixed gas atmosphere of nitrogen and oxygen, the content of nitrogen and oxygen of the β-sialon sintered body can be controlled.

The manufacturing method for the check ball further includes a step in which the surface of the molded body is processed before the molded body is sintered.

When the molded body is sintered, the hardness of the molded body becomes extremely high, and the processing becomes difficult. Thus, adopting the finishing step of performing substantially processing of the molded body and finishing the molded body as the check ball 21 after sintering involves increase in the manufacturing cost of the check ball 21. In contrast, the manufacturing cost of the check ball 21 can be suppressed by performing processing of the molded body before sintering of the molded body, and suppressing the processing amount of the molded body after sintering in the finishing step and the like. In particular, in the manufacturing method adopting the hot pressing, a relatively large processing amount becomes necessary after sintering to remove the abnormal layer, and thus the merits of such steps are small. However, in the manufacturing method for the check ball 21 of the present invention, the merits of such steps are extremely large because the processing amount for removing the abnormal layer is suppressed through adoption of the step of sintering the molded body made of β-sialon under the pressure of equal to or smaller than 1 MPa.

The manufacturing method for the check ball further includes the step in which the surface of the sintered molded body is processed and the region including the surface is removed. The thickness of the molded body removed in the step in which the surface of the sintered molded body is processed is equal to or smaller than 150 µm.

In the manufacturing method for the check ball of the present invention, a highly dense layer described above having a thickness of approximately 150 µm is formed in the region including the surface. Thus, when the step in which the surface of the sintered molded body is processed and the region including the surface is removed, such as the finishing step, is performed, the highly dense layer can be left at the contact surface of the check ball 21 by setting the thickness of the molded body removed in the step to be equal to or smaller than 150 µm. Therefore, the check ball 21 in which the durability with respect to the rolling and sliding fatigue is further enhanced can be manufactured by adopting such step. In order to more reliably leave the highly dense layer, the thickness of the sintered molded body to be removed in such step is more preferably equal to or smaller than 100 µm.

In the embodiment described above, there is described the auto tensioner used in the timing belt tensile force adjustment device of the automobile engine, but it may be used in the auxiliary belt tensile force adjustment device of the automobile engine or the timing chain tensile force adjustment device of the automobile engine. Here, the auxiliary belt is a belt provided to drive mainly an alternator (power generator), oil pump of power steering wheel, compressor of air conditioner, and the like. The timing chain is a chain for driving a camshaft from the rotation of the crankshaft of the engine. In other words, the auto tensioner of the present invention is suitable to the timing belt tensile force adjustment device, the auxiliary belt tensile force adjustment device, or the timing chain tensile force adjustment device, and the like of the automobile engine because it is provided with a check ball excelling in durability.

The embodiment of the present invention has been described above, but the present invention is not limited to such embodiment, and various modifications may be made. Forexample, in the embodiment, the return spring 6 is interiorly attached to the cylinder 1, but the return spring may be arranged on the outer peripheral side of the cylinder. Any one of the return spring 6 and the plunger spring 25 may be omitted if the rod 3 and the plunger 4 are integrated. Further, the sleeve 2 may not be arranged.

### [First example]

Hereinafter, a first example of the present invention is described. Rolling bearings including roller bodies (balls) constituted by β-sialon sintered bodies having various z-values were manufactured, and tests were conducted for examining a relation between the z-values and rolling fatigue lives (durability). That is, tests were conducted for examining durability of balls which were obtained by constituting, in place of a check ball of an auto tensioner, balls serving as roller bodies of rolling bearings with the β-sialon sintered bodies. The tests were conducted by the following procedure.

In the beginning, a manufacturing method for test bearings to be tested is described. First, powder of β-sialon manufactured within a z-value range of 0.1 to 4 by a combustion synthesis method was prepared, and roller bodies having z-values ranging from 0.1 to 4 were manufactured by the method basically the same as that for the check ball 21, which is described with reference to FIG. 3 in the first embodiment. The manufacturing method is specifically described as follows. β-sialon powder micronized into submicron size, aluminum oxide (AKP 30 manufactured by Sumitomo Chemical Co.,Ltd.), and yttrium oxide (Yttriumoxide grade C manufactured by H.C. Starck Ltd.), which were used as sintering additive, were mixed by wet blending with use of a ball mill. After that, granulation was performed with use of a spray drier, whereby granulated powder was manufactured. The granulated powder was molded with use of a die into spherical shapes, and was pressurized by cold isostatic pressing (CIP), whereby spherical molded bodies were obtained.

Successively, pressureless sintering as first sintering was performed on the molded bodies, and then an HIP (hot isostatic pressing) treatment was performed thereon under pressure of 200 MPa in nitrogen atmosphere, whereby sintered spherical bodies were manufactured. Next, lapping was performed on the sintered spherical bodies, and ceramic balls of 3/8 inch (JIS class: G5) were obtained. Then, races made of bearing steel (JIS standard: SUJ2) separately prepared were combined with the ceramic balls, whereby bearings according to JIS standard 6206 were manufactured (Examples A to H and Comparison Examples B and C) . Further, for comparison, a roller body made of silicon nitride, that is, a roller body in which a z-value is 0 was manufactured by the same method as that for the roller bodies constituted by the β-sialon, and was assembled into a bearing (Comparison Example A).

Next, test conditions are described. On each of the bearings according to JIS standard 6206, which were manufactured as described above, fatigue tests were conducted in an operation performed under the following conditions: maximum contact surface pressure Pₘₐₓ: 3.2 GPa, number of rotations of bearing: 2000 rpm, lubrication: circulating lubrication with use of turbine oil VG68 (clean oil), and test temperature: room temperature. Vibration of the bearings during the operation was monitored by the vibration detector. The tests were stopped at the time breakage occurred in the roller bodies and the vibration of the bearings exceeded a predetermined value. Time periods from the start to stop of the operation were recorded as lives of the bearings. Further, after the tests were stopped, the bearings were decomposed so that a breakage condition of each of the roller bodies was confirmed.

**[Table 1]**

| | Z-value | Life ratio | Breakage state |
|---|---|---|---|
| Comparison Example A | 0 (silicon nitride) | 1 | Peel |
| Example A | 0.1 | 1.05 | Peel |
| Example B | 0.5 | 1.05 | Peel |
| Example C | 1 | 1.05 | Peel |
| Example D | 1.5 | 1.01 | Peel |
| Example E | 2 | 0.99 | Peel |
| Example F | 2.5 | 0.95 | Peel |
| Example G | 3 | 0.9 | Peel |
| Example H | 3.5 | 0.74 | Peel (involving slight abrasion) |
| Comparative Example B | 3.8 | 0.12 | Peel (involving abrasion) |
| Comparative Example C | 4 | <0.05 | Abrasion |

Table 1 shows a result of the test of this example. In Table 1, a life in each of the examples or the comparison examples is represented by a life ratio in which a life in Comparison Example A (silicon nitride) is 1. Further, regarding breakage states, the case where peeling occurs on the surface of the roller body is described as "peel, " and the case where the surface is abraded without involving generation of peeling and the test is stopped is described as "abrasion."

With reference to Table 1, lives in Examples A to H in which the z-value ranges from 0.1 to 3.5 are comparable to the case of silicon nitride (Comparison Example A). Further, the breakage states are "peel" as in the case of silicon nitride. In contrast, with reference to Comparison Example B in which the z-value exceeds 3.5, the life is largely decreased, and abrasion is observed on the rolling body. That is, in Comparison Example B in which the z-value is 3.8, it is probable that, while peeling finally occurred to the rolling body, the life was largely decreased owing to the influence of the abrasion of the roller body. In addition, in Comparison Example C in which the z-value is 4, the abrasion of the roller body has progressed within an extremely short period of time, whereby durability of the rolling bearing is significantly decreased.

As described above, within the z-value range of 0.1 to 3.5, durability of each of the rolling bearings provided with the roller bodies constituted by the sialon sintered bodies is substantially equal to that of each of the rolling bearings provided with the roller bodies constituted by the sintered bodies of silicon nitride. In contrast, when the z-value exceeds 3.5, the roller body is more easily abraded, whereby a rolling fatigue life is largely decreased. Further, when the z-value becomes large, the cause of breakage of the roller body constituted by β-sialon changes from "peel" to "abrasion. " As a result, it became apparent that the rolling fatigue life was significantly decreased. As described above, by setting the z-value to range from 0.1 to 3.5, it was confirmed that a roller body constituted by a β-sialon sintered body and capable of stably ensuring sufficient durability could be provided.

Note that, with reference to Table 1, in Example H in which the z-value is 3.5, which exceeds 3, slight abrasion occurred to the roller body, and the life thereof is decreased in comparison with those in Examples A to G. Thus, in order to more stably ensure sufficient durability, it is desirable that the z-value be equal to or smaller than 3.

### [Second example]

Hereinafter, a second example of the present invention is described. Rolling bearing including roller bodies constituted by β-sialon sintered bodies having various z-values were manufactured, and tests were conducted for examining a relation between the z-values and rolling fatigue lives under the environment hard foreign substances enter the interior of each of the rolling bearings. Tests were conducted by the following procedure.

In the beginning, a manufacturing method for test bearings to be tested is described. First, powder of β-sialon manufactured within a z-value range of 0.1 to 2. 5 by a combustion synthesis method was prepared, and roller bodies having z-values ranging from 0.1 to 2.5 were manufactured by the same method as that in Example 1 described above. Then, races made of various steel materials separately prepared were combined with the roller bodies, whereby bearings according to JIS standard 6206 were manufactured (Comparison Examples B to F and Examples A to E) . Examples of the adopted standard of the steel constituting the respective races include JIS standards SUJ2, SCM420, SCr420, S53C, S45C, and S40C, and AISI standard M50. Further, for comparison, roller bodies made of silicon nitride, that is, roller bodies having z-values of 0 were manufactured by the same method as that for the roller bodies constituted by the β-sialon, and were assembled into bearings (Comparison Example A).

Next, test conditions are described. On each of the bearings according to JIS standard 6206, which were manufactured as described above, fatigue tests were conducted in an operation in the state in which powder of KHA 30 manufactured by gas-atomizing (grain diameter 108 to 180 µm: hard foreign substance) was added to the lubricating oil at a rate of 0.4 g/L under the following conditions: maximum contact surface pressure Pₘₐₓ: 2.5 GPa, number of rotations of bearing: 2000 rpm, lubrication: turbine oil VG68, and test temperature: room temperature. Vibration of the bearings during the operation was monitored by the vibration detector, and the tests were stopped at the time breakage occurred in the bearings and the vibration of the bearings exceeded a predetermined value. Time periods from the start to stop of the operation were recorded as lives of the bearings. Further, after the tests were stopped, the bearings were decomposed so that a breakage condition of each of the bearings was confirmed.

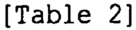

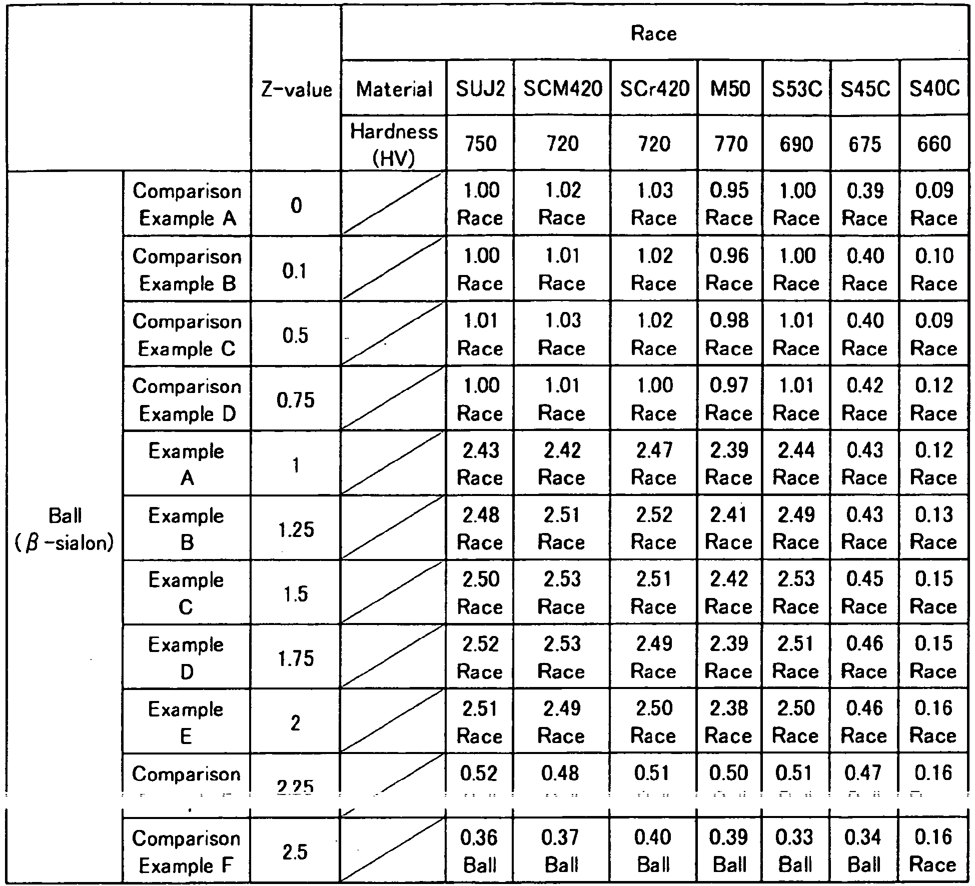

Table 2 shows a result of the test of this example. In Table 2, on the upper side of each cell, a life in each of the examples or the comparison examples is represented by a life ratio in which life in Comparison Example A (silicon nitride) is 1 when a material of the race is SUJ2. Further, on the lower side of each cell, a broken portion (race or ball) of each of the bearings is described.

With reference to Table 2, in Examples A to E in which the z-values range from 1.0 to 2.0, longer lives are apparently achieved in comparison with the case of silicon nitride (Comparison Example A) . As shown in Table 2, broken portions were race members (races) as in the case of silicon nitride, and breakage states thereof are "peel." In contrast, in Comparison Examples E and F in which the z-values exceed 2.0, lives are largely decreased, and breakage (peeling) of the roller bodies (balls) is preceded. That is, in Comparison Example E in which the z-value is 2.25, lives were largely decreased probably because damages occurred in bearing components (balls) made of the β-sialon sintered bodies owing to influence of the hard foreign substances. In addition, in Comparison Example F in which the z-value is 2.5, peeling of the roller bodies occurred within a still shorter period of time, and hence durability of the rolling bearing was remarkably lowered.

Meanwhile, in Comparison Examples B to D in which the z-values are smaller than 1.0, lives are lowered to substantially the same extent in Comparison Example A, and breakage (peeling) of the race members is preceded. That is, difference in physical property is small between Comparison Example D in which the z-value is 0.75 and Comparison Example A in which the z-value is 0 (silicon nitride). Thus, it is probable that damages caused by hard foreign substances coming between the balls made of the β-sialon sintered bodies and the race members opposed to the balls concentrated on the race member side, and that the lives were lowered owing to this to the extent in Comparison Example A in which balls made of silicon nitride sintered bodies were adopted.

Further, with reference to Table 2, in the case where hardness (surface harness) of the races opposed thereto is lower than HV680 even when the z-values range from 1. 0 to 2.0, there is found a tendency that the lives are lowered in comparison with the case where the hardness of the races is equal to or higher than HV680. This is probably because, in the case where the hardness of the races is low, damages are more easily caused on the race member side by hard foreign substances coming between the balls made of the β-sialon sintered bodies and the race members opposed to the balls.

As described above, while the roller bodies made of the β-sialon sintered bodies are more easily broken when the z-values exceed 2.0, contact surface pressure between the roller bodies and the counterpart members is increased when the z-values are smaller than 1.0, and damages more easily occur to the counterpart members. In this context, by setting the z-values within the range from 1.0 to 2.0, balance between the strength of the material constituting the roller bodies and reduction in contact surface pressure is ensured. As a result, it was confirmed that, under the environment hard foreign materials enter the interior of the bearing, the lives of the roller bearings including the roller bodies (balls) made of the β-sialon sintered bodies were increased. In particular, when one of the race members and the roller bodies is components made of the β-sialon sintered bodies and the other of the race members and the roller bodies is made of steel, physical property of the race members and physical property of the roller bodies are well blended, whereby it is possible to suppress damages caused by the hard foreign substances. It was confirmed that, as described above, by setting the z-values within the range from 1.0 to 2.0, inexpensive roller bodies made of the β-sialon sintered bodies can be provided, the roller bodies being capable of stably ensuring sufficient durability and being used even under the environment hard foreign substances enter the interior of the bearing.

Further, it was confirmed that, when one of the race members and the roller bodies was components made of the β-sialon sintered bodies and the other of the race members and the roller bodies was made of steel, for suppressing damages caused by the components made of steel, the surface hardness of the components made of steel was preferably set equal to or higher than HV680.

### [Third example]

Hereinafter, a third example of the present invention is described. Tests were conducted for examining formation states of a dense layer and a highly dense layer in cross-section of the ball of the present invention. The tests were conducted by the following procedure.

First, powder of β-sialon having a composition of Si₅AlON₇ manufactured by a combustion synthesis method (product name: Meramix, manufactured by Isman J Corporation) was prepared, and a cubic test piece with sides approximately 10 mm was manufactured by the same method as that for the check ball 21, which is described with reference to FIG. 3 in the first embodiment. The manufacturing method is specifically described as follows. β-sialon powder micronized into submicron size, aluminum oxide (AKP 30 manufactured by Sumitomo Chemical Co.,Ltd.), and yttrium oxide (Yttriumoxide grade C manufactured by H.C. Starck Ltd.), which were used as sintering additive, were mixed by wet blending with use of a ball mill. After that, granulation was performed with use of a spray drier, whereby granulated powder was manufactured. The granulated powder was molded with use of a die into a predetermined shape, and was pressurized by cold isostatic pressing (CIP), whereby a molded body was obtained. Successively, the molded body was sintered by being heated to 1, 650°C under pressure of 0.4 MPa in nitrogen atmosphere, whereby the cubic test piece was manufactured.

After that, the test piece was cut and a surface thereof obtained by cutting was lapped with use of a diamond lapping machine. Then, mirror lapping was performed thereon with use of a chrome oxide lapping machine, whereby a cross-section for observation, which includes a center of the cube, was formed. Then, the cross-section was observed with oblique light of an optical microscope (Microphoto-FXA manufactured by Nikon Corporation), and was photographed with use of an instant photo (FP-100B manufactured by FUJIFILM Corporation) at 50 times. After that, an image of the obtained photograph was scanned into a personal computer with use of a scanner (resolution of 300 DPI). Then, the image was binarized (binarize threshold in this example: 140) with use of an image processing application (WinROOF manufactured by MITANI CORPORATION) based on a luminance threshold so that an area ratio of the white region was measured.

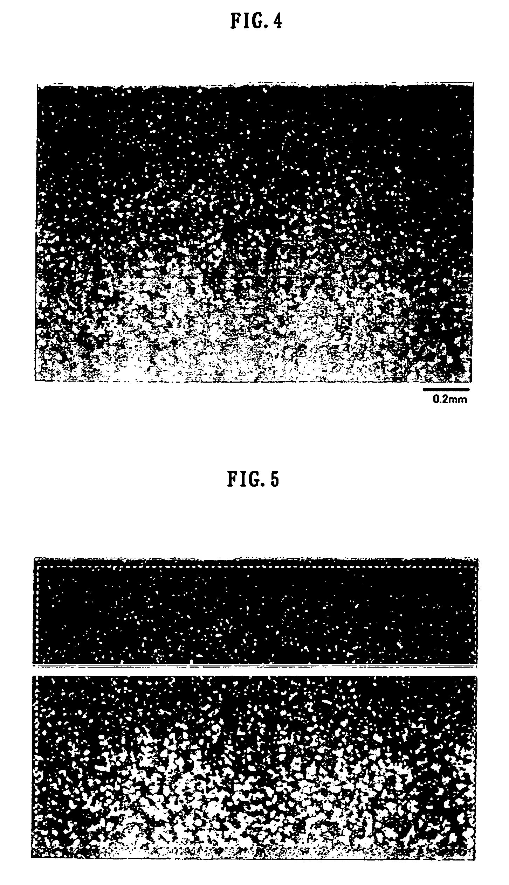

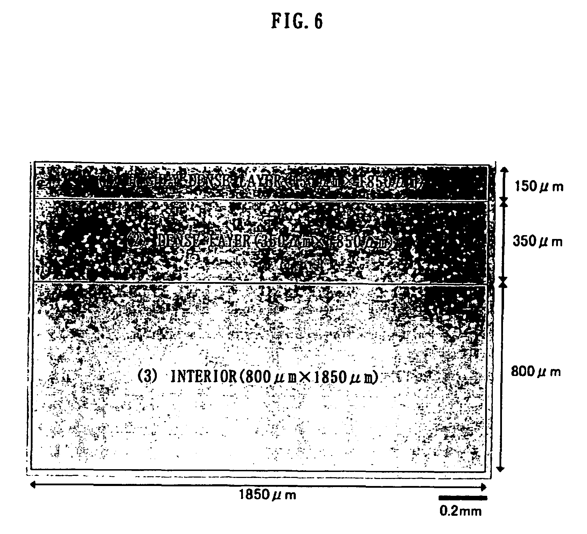

Next, a result of the test is described. FIG. 4 is a photograph of the cross-section for observation of the test piece, which was taken with oblique light of the optical microscope. Further, FIG. 5 illustrates an example of a state in which the image of the photograph of FIG. 4 is binarized with use of an image processing application based on a luminance threshold. Further, FIG. 6 illustrates a region (evaluation region) in which an image processing is performed when the image of the photograph of FIG. 4 is binarized with use of an image processing application based on a luminance threshold so that values are smaller than 1.0, and damages more easily occur to the counterpart members. In this context, by setting the z-values within the range from more than 1.0 to 2.0, balance between the strength of the material constituting the roller bodies and reduction in contact surface pressure is ensured. As a result, it was confirmed that, under the environment hard foreign materials enter the interior of the bearing, the lives of the roller bearings including the roller bodies (balls) made of the β-sialon sintered bodies were increased. In particular, when one of the race members and the roller bodies is components made of the β-sialon sintered bodies and the other of the race members and the roller bodies is made of steel, physical property of the race members and physical property of the roller bodies are well blended, whereby it is possible to suppress damages caused by the hard foreign substances. It was confirmed that, as described above, by setting the z-values within the range from 1.0 to 2.0, inexpensive roller bodies made of the β-sialon sintered bodies can be provided, the roller bodies being capable of stably ensuring sufficient durability and being used even under the environment hard foreign substances enter the interior of the bearing.

Further, it was confirmed that, when one of the race

| | Depth from outermost surface (*µ*m) | Area ratio of white region (%) | |
|---|---|---|---|
| | | Average value of five fields of view | Maximum value of five fields of view |
| (1) Highly dense layer | 150 | 1.2 | 3.5 |
| (2) Dense layer | 150~500 | 3.7 | 7.0 |
| (3) Interior | >500 | 18.5 | 22.4 |

With reference to Table 3, while the area ratio of the interior of the white region of this example was 18.5%, 3.7% was measured in the region in which the depth from the surface was equal to or smaller than 500 µm, and 1.2% was measured in the region in which the depth from the surface was equal to or smaller than 150 µm. This result confirmed that, in the test piece of this example, which was manufactured by the same method as that for the ball of the present invention, the dense layer and the highly dense layer, which were layers having lower area ratio of the white region than that of the interior, were formed in the region including the surface

### [Fourth example]

Hereinafter, a fourth example of the present invention is described. Tests were conducted for confirming a rolling fatigue life of the ball of the present invention. The tests were conducted by the following procedure.

In the beginning, a manufacturing method for test bearings to be tested is described. First, powder of β-sialon having a composition of Si₅AlON₇ manufactured by a combustion synthesis method (product name: Meramix, manufactured by Isman J Corporation) was prepared, and 3/8-inch ceramic spheres each having a diameter of 9.525 mm were manufactured by the same method as that for the check ball 21, which is described with reference to FIG. 3 in the first embodiment. The manufacturing method is specifically described as follows. β-sialon powder micronized into submicron size, aluminum oxide (AKP 30 manufactured by Sumitomo Chemical Co.,Ltd.), and yttrium oxide (Yttriumoxide grade C manufactured by H.C. Starck Ltd.), which were used as sintering additive, were mixed by wet blending with use of a ball mill. After that, granulation was performed with use of a spray drier, whereby granulated powder was manufactured. The granulated powder was molded with use of a die into spherical shapes, and was pressurized by cold isostatic pressing (CIP), whereby spherical molded bodies were obtained.

Next, green body processing was performed on the molded bodies so that working allowance after sintering thereof achieved a predetermined dimension, and the molded bodies were sintered by being heated to 1,650°C under pressure of 0.4 MPa in nitrogen atmosphere, whereby sintered spherical bodies were manufactured. Next, lapping was performed on the sintered spherical bodies, and ceramic balls of 3/8 inch (JIS class: G5) were obtained. Then, races made of bearing steel (JIS standard: SUJ2) separately prepared were combined with the ceramic balls, whereby bearings according to JIS standard 6206 were manufactured. In this context, thickness (working allowance) of the sintered spherical bodies, which was eliminated by lapping with respect to the sintered spherical bodies, was varied at eight stages, whereby bearings of eight types were prepared (Examples A to H). Meanwhile, for comparison, lapping was performed as described above on the sintered spherical bodies (EC141 manufactured by NGK SPARK PLUG CO., LTD.) obtained by hot pressing in which material powder containing silicon nitride and sintering additive was used, and races made of bearing steel (JIS standard: SUJ2) separately prepared were combined with the sintered spherical bodies. In this manner, bearings according to JIS standard 6206 were manufactured (Comparison Example A). Working allowance as a result of lapping was set to 0.25 mm.

Next, test conditions are described. On each of the bearings acceding to JIS standard 6206, which were manufactured as described above, fatigue tests were conducted in an operation performed under the following conditions: maximum contact surface pressure Pₘₐₓ: 3.2 GPa, number of rotations of bearing: 2000 rpm, lubrication: circulating lubrication with use of turbine oil VG68 (clean oil), and test temperature: room temperature. Vibration of the bearings during the operation was monitored by the vibration detector. The tests were stopped at the time breakage occurred in the roller bodies and the vibration of the bearings exceeded a predetermined value. Time periods from the start to stop of the operation were recorded as lives of the bearings. Note that, the number of tested bearings were fifteen in each of the examples and the comparison examples, and durabilities were evaluated based on the life ratios with respect to that in Comparison Example A, the life ratios being obtained by calculating the lives L₁₀ thereof.

**[Table 4]**

| | Working allowance (mm) | L₁₀ life (period of time) | Life ratio |
|---|---|---|---|
| Example A | 0.05 | 6492 | 3.19 |
| Example B | 0.10 | 6387 | 3.14 |
| Example C | 0.15 | b404 | 3.15 |
| Example D | 0.20 | 3985 | 1.96 |
| Example E | 0.30 | 4048 | 1.99 |
| Example F | 0.40 | 3945 | 1.94 |
| Example G | 0.50 | 3069 | 1.51 |
| Example H | 0.60 | 867 | 0.43 |
| Comparison Example A | 0.25 | 2036 | 1.00 |

Table 4 shows a result of the test of this example. With reference to Table 4, it can be said that all the lives of the bearings of this example are preferable in consideration of manufacturing cost thereof and the like. In this context, by setting the working allowance equal to or smaller than 0.5 mm, the lives of the bearings of Examples D to G, in which dense layers were caused to remain in the surfaces of the roller bodies, were approximately 1.5 to 2 times as long as the life in Comparison Example A. Further, by setting the working allowance equal to or smaller than 0.15 mm, the lives of the bearings of Examples A to C, in which highly dense layers were caused to remain in the surfaces of the roller bodies, were approximately 3 times as long as the life in Comparison Example A. This result confirmed that the rolling bearing provided with the ball of the present invention was excellent in durability. In addition, it was found that the life of the rolling bearing provided with the ball the same as the check ball 21 of the present invention was increased by setting the working allowance of the ball equal to or smaller than 0.5 mm so as to cause the dense layers to remain in the surfaces of the balls, and was further increased by setting the working allowance of the ball equal to or smaller than 0.15 mm so as to cause the highly dense layers to remain in the surfaces of the balls.

As described above, it is found that the roller bodies including, as main components, β-sialon satisfying 0.1<z≦2.0 are excellent in durability. Therefore, the check ball including, as a main component, β-sialon satisfying 0.1< z ≦ 2.0 is excellent in durability, and hence life of the auto tensioner can be increased.

### [Industrial Applicability]

In the embodiment described above, there is described the auto tensioner used in the timing belt tensile force adjustment device of the automobile engine, but it may be used in the auxiliary belt tensile force adjustment device of the automobile engine or the timing chain tensile force adjustment device of the automobile engine.

### [Reference Signs List]

[0115]
- 1: cylinder
- 3: rod
- 4: plunger
- 12: pressure chamber
- 13: reservoir chamber
- 16: path
- 20: closure means
- 21: check ball
- 22: check valve

## Claims

1. An auto tensioner, comprising:
a plunger(4) slidably arranged along an axial direction of a cylinder (1), the plunger(4) partitioning interior of the cylinder into a pressure chamber (12) and a reservoir chamber (13);
a path (16) communicating the pressure chamber (12) and the reservoir chamber (13) with each other; and
a closure means (20) provided to the path, for closing the path when pressure in the pressure chamber (12) is higher than pressure in the reservoir chamber (13),
**characterized in that**
the closure means (20) is constituted by a check valve provided with a check ball(21), the check ball(21) being constituted by a sintered body comprising: as a main component, β-sialon expressed by a composition formula of Si₆. _{z}Al_{z}O_{z}N_{8-z} where the z- value is greater than 1.0 but less or equal to 2.0sintering additive as remainder and impurities as remainder.

2. An auto tensioner according to claim 1, **characterized in that** the sintered body comprises: as a main component, β-sialon expressed by a composition formula of Si_{6-z}Al_{z}O_{z}N_{8-z} where the z- value is greater than 1.0 but less or equal to 2.0, and impurities as remainder.

3. The auto tensioner according to claim 1 or 2, **characterized in that** the check ball (21) has, in a region including a contact surface with a valve sheet surface, a dense layer the denseness of this layer being higher that the denseness in the interior of the ball.

4. The auto tensioner according to claim 3, wherein, when a cross-section of the dense layer is observed with oblique light of an optical microscope, an area ratio of a white region observed as a region of white is equal to or smaller than 7%.

5. The auto tensioner according to claim 3 or 4, wherein a highly dense layer having denseness higher than that of other regions in the dense layer is formed in a region including a surface of the dense layer.

6. The auto tensioner according to claim 5, wherein, when a cross-section of the highly dense layer is observed with oblique light of an optical microscope, an area ratio of a white region observed as a region of white is equal to or smaller than 3.5%.

7. The auto tensioner according to any one of claims 1 to 6, **characterized by** being used in a timing belt tensile force adjustment device of an automobile engine.

8. The auto tensioner according to any one of claims 1 to 6, **characterized by** being used in an auxiliary belt tensile force adjustment device of an automobile engine.

9. The auto tensioner according to any one of claims 1 to 6, **characterized by** being used in a timing chain tensile force adjustment device of an automobile engine.

## Patentansprüche

1. Selbstspanner, welcher Folgendes aufweist:
einen Kolben (4), der entlang einer axialen Richtung eines Zylinders (1) verschiebbar angeordnet ist, wobei der Kolben (4) das Innere des Zylinders in eine Druckkammer (12) und eine Speicherkammer (13) aufteilt;
einen Durchgang (16), der die Druckkammer (12) und die Speicherkammer (13) miteinander verbindet; und
ein bei dem Durchgang vorgesehenes Verschlussmittel (20), um den Durchgang zu verschließen, wenn der Druck in der Druckkammer (12) höher ist als der Druck in der Speicherkammer (13),
**dadurch gekennzeichnet, dass**
das Verschlussmittel (20) aus einem Rückschlagventil besteht, das mit einer Rückflusssperrkugel (21) versehen ist, wobei die Rückflusssperrkugel (21) aus einem Sinterkörper besteht, der aufweist: als Hauptbestandteil ß-Sialon, ausgedrückt durch eine Zusammensetzungsformel Si_{6-z}Al_{z}O_{z}N_{8-z}, wobei der Z-Wert größer ist als 1,0, aber kleiner oder gleich 2,0, Sinterzusätze als Rest und Verunreinigungen als Rest.

2. Selbstspanner nach Anspruch 1, **dadurch gekennzeichnet, dass** der Sinterkörper aufweist: als Hauptbestandteil ß-Sialon, ausgedrückt durch eine Zusammensetzungsformel Si_{6-z}Al_{z}O_{z}N_{8-z}, wobei der Z-Wert größer ist als 1,0, aber kleiner oder gleich 2,0, sowie Verunreinigungen als Rest.

3. Selbstspanner nach Anspruch 1 oder 2, **dadurch gekennzeichnet, dass** die Rückflusssperrkugel (21) in einem Bereich, der auch eine Kontaktfläche mit einer Ventilfläche umfasst, eine dichte Schicht aufweist, wobei die Dichte dieser Schicht höher ist als die Dichte im Inneren der Kugel.

4. Selbstspanner nach Anspruch 3, bei dem bei der Betrachtung eines Querschnitts der dichten Schicht mit schräg einfallendem Licht eines optischen Mikroskops ein Flächenanteil eines weißen Bereichs, der als Bereich von Weiß wahrgenommen wird, kleiner oder gleich 7% ist.

5. Selbstspanner nach Anspruch 3 oder 4, bei dem eine hochdichte Schicht mit einer Dichte, die höher ist als die von anderen Bereichen in der dichten Schicht, in einem Bereich ausgebildet ist, der eine Oberfläche der dichten Schicht umfasst.

6. Selbstspanner nach Anspruch 5, bei dem bei der Betrachtung eines Querschnitts der hochdichten Schicht mit schräg einfallendem Licht eines optischen Mikroskops ein Flächenanteil eines weiße Bereichs, der als Bereich von Weiß wahrgenommen wird, kleiner oder gleich 3,5% ist.

7. Selbstspanner nach einem der Ansprüche 1 bis 6, **dadurch gekennzeichnet, dass** er bei der Zugkrafteinstellvorrichtung eines Zahnriemens eines Kraftfahrzeugmotors verwendet wird.

8. Selbstspanner nach einem der Ansprüche 1 bis 6, **dadurch gekennzeichnet, dass** er als Zugkrafteinstellvorrichtung eines Hilfsriemens eines Kraftfahrzeugmotors verwendet wird.

9. Selbstspanner nach einem der Ansprüche 1 bis 6, **dadurch gekennzeichnet, dass** er als Zugkrafteinstellvorrichtung einer Steuerkette eines Kraftfahrzeugmotors verwendet wird.

## Revendications

1. Auto-tendeur comprenant :
un piston (4) agencé de manière coulissante le long d'une direction axiale d'un cylindre (1), le piston (4) divisant l'intérieur du cylindre en une chambre de pression (12) et une chambre de réservoir (13) ;
un chemin (16) mettant la chambre de pression (12) et la chambre de réservoir (13) en communication l'une avec l'autre ; et
un moyen de fermeture (20) prévu sur le chemin, destiné à fermer le chemin lorsque la pression dans la chambre de pression (12) est supérieure à la pression dans la chambre de réservoir (13),
**caractérisé en ce que**
le moyen de fermeture (20) est constitué par un clapet de non-retour muni d'une bille (21), la bille (21) étant constituée par un corps fritté comprenant : en tant que composant principal, du β-sialon exprimé par une formule de composition Si_{6-z}Al_{z}O_{z}NB_{8-z}, où la valeur de z est supérieure à 1,0, mais inférieure ou égale à 2,0, un additif de frittage en tant que reste, et des impuretés en tant que reste.

2. Auto-tendeur selon la revendication 1, **caractérisé en ce que** le corps fritté comprend : en tant que composant principal, du β-sialon exprimé par une formule de composition Si_{6-z}Al_{z}O_{z}N_{8-z}, où la valeur de z est supérieure à 1,0, mais inférieure ou égale à 2,0, et des impuretés en tant que reste.

3. Auto-tendeur selon la revendication 1 ou 2, **caractérisé en ce que** la bille (21) présente, dans une région comprenant une surface de contact avec une surface de feuille de clapet, une couche dense, la densité de cette couche étant supérieure à la densité à l'intérieur de la bille.

4. Auto-tendeur selon la revendication 3, dans lequel, lorsqu'une section transversale de la couche dense est observée à la lumière rasante d'un microscope optique, un rapport d'aire d'une région blanche observée en tant que région de blanc est égal ou inférieur à 7 %.

5. Auto-tendeur selon la revendication 3 ou 4, dans lequel une couche très dense ayant une densité supérieure à celle des autres régions dans la couche dense est formée dans une région comprenant une surface de la couche dense.

6. Auto-tendeur selon la revendication 5, dans lequel, lorsqu'une section transversale de la couche très dense est observée à la lumière rasante d'un microscope optique, un rapport d'aire d'une région blanche observée en tant que région de blanc est égal ou inférieur à 3,5%.

7. Auto-tendeur selon l'une quelconque des revendications 1 à 6, **caractérisé en ce qu'**il est utilisé dans un dispositif d'ajustement de force de tension de courroie de distribution d'un moteur d'automobile.

8. Auto-tendeur selon l'une quelconque des revendications 1 à 6, **caractérisé en ce qu'**il est utilisé dans un dispositif d'ajustement de force de tension de courroie auxiliaire d'un moteur d'automobile.

9. Auto-tendeur selon l'une quelconque des revendications 1 à 6, **caractérisé en ce qu'**il est utilisé dans un dispositif d'ajustement de force de tension de chaîne de distribution d'un moteur d'automobile.
